# EUROPEAN PATENT APPLICATION

(11) **EP 4 503 221 A1**
(43) Date of publication of application: **05.02.2025**
(21) Application number: 22956368.9
(22) Date of filing: 29.12.2022
(51) Int. Cl.: H01M 10/0525, H01M 10/054, H01M 10/058, H01M 6/14

(54) **END COVER ASSEMBLY, BATTERY CELL, BATTERY, AND ELECTRICAL APPARATUS**

(30) Priority: 26.08.2022 CN 202222268176 U
(71) Applicant: Contemporary Amperex Technology Co., Limited, Ningde, Fujian 352100 (CN)
(72) Inventor: YANG, Jianxiong, Ningde, Fujian 352100 (CN); CHEN, Xinxiang, Ningde, Fujian 352100 (CN); GUO, Zhijun, Ningde, Fujian 352100 (CN); ZHENG, Yulian, Ningde, Fujian 352100 (CN); WANG, Peng, Ningde, Fujian 352100 (CN)
(74) Representative: Ziebig Hengelhaupt Intellectual Property Attorneys Patentanwaltskanzlei PartGmbB
(86) International application number: PCT/CN2022/143266
(87) International publication number: WO 2024/040837

(57) **Abstract**

This application discloses an end cover assembly (1), a battery cell (10), a battery (100), and an electric apparatus. The end cover assembly (1) is applied to the battery cell (10), including an end cover (11) and an electrode terminal (12). The end cover (11) is provided with a lead-out hole (113). The electrode terminal (12) is mounted on the end cover (11), a portion of the electrode terminal (12) passes through the lead-out hole (113), and a bottom surface (125) of the electrode terminal (12) extends out of the lead-out hole (113) and is used to be fixed to an adapting component (4) of the battery cell (10) by welding. According to the end cover assembly (1) of this application, when the end cover assembly (1) is applied to the battery cell (10) and connected to the adapting component (4) of the battery cell (10), because the bottom surface (125) of the electrode terminal (12) protrudes from the lead-out hole (113), the adapting component (4) that facilitates removal of metal shavings can be used when the electrode terminal (12) is fixed to the adapting component (4) by welding, reducing residual metal shavings after welding, thereby reducing safety risks caused by the residual metal shavings.

## Description

### CROSS-REFERENCE TO RELATED APPLICATIONS

This application claims priority to Chinese Patent Application No. 202222268176.8, filed on August 26, 2022 and entitled "END COVER ASSEMBLY, BATTERY CELL, BATTERY, AND ELECTRIC APPARATUS", which is incorporated herein by reference in its entirety.

### TECHNICAL FIELD

This application relates to the field of battery technologies, and in particular, to an end cover assembly, a battery cell, a battery, and an electric apparatus.

### BACKGROUND

This section provides only background information related to this disclosure, which is not necessarily the prior art.

With the development of new energy, an increasing number of fields are using new energy as power. With advantages such as high energy density, support for cyclic charging, safety, and environmental friendliness, traction batteries have been widely used in fields such as new energy vehicles, consumer electronics, and energy storage systems.

A traction battery includes a battery cell, and an adapting component of the battery cell is fixed to an electrode terminal by welding. Residual metal shavings during welding are prone to increasing safety hazards of the battery cell.

### SUMMARY

In view of the foregoing problem, this application provides an end cover assembly, a battery cell, a battery, and an electric apparatus, so as to reduce safety risks caused by residual metal shavings.

A first aspect of this application proposes an end cover assembly applied to a battery cell, where the end cover assembly includes:
an end cover, where the end cover is provided with a lead-out hole; and
an electrode terminal, where the electrode terminal is mounted on the end cover, a portion of the electrode terminal passes through the lead-out hole, and a bottom surface of the electrode terminal extends out of the lead-out hole and is used to be fixed to an adapting component of the battery cell by welding.

According to the end cover assembly of this application, when the end cover assembly is applied to the battery cell and connected to the adapting component of the battery cell, because the bottom surface of the electrode terminal protrudes from the lead-out hole, the adapting component that facilitates removal of metal shavings can be used when the electrode terminal is fixed to the adapting component by welding, reducing residual metal shavings after welding, thereby reducing safety risks caused by the residual metal shavings.

In some embodiments of this application, in an axial direction of the lead-out hole, a lower surface of the end cover has a first region opposite the adapting component, the adapting component and the first region being spaced apart. The adapting component and the first region being spaced apart can avoid interference between the adapting component and the end cover, improving stability of welding between the adapting component and the electrode terminal.

In some embodiments of this application, in the axial direction of the lead-out hole, a distance between the adapting component and the first region is L, where 0 mm < L ≤ 0.3 mm. When the distance between the adapting component and the lower surface is greater than 0 mm and less than or equal to 0.3 mm, the adapting component and the lower surface can be spaced apart, so as to reduce transfer of welding heat to the end cover, reducing adverse effects of the welding heat on the end cover.

In some embodiments of this application, an extension height of the bottom surface is T, where T ∈ [0.05 mm, 1 mm]. The value of the extension height of the bottom surface of the electrode terminal relative to the lead-out hole is set in the range of [0.05 mm, 1 mm]. In the process of fixing the electrode terminal to the adapting component by welding, this reduces adverse effects of heat generated during fixing by welding on the end cover while facilitating removal of the metal shavings, and also reduces the space occupied by the electrode terminal.

In some embodiments of this application, the electrode terminal includes a terminal plate and an extension portion, where the terminal plate is located at a side of the end cover and covers the lead-out hole, the end cover assembly further includes a sealing ring, at least a portion of the sealing ring is located between the terminal plate and the end cover to seal the lead-out hole, the extension portion extends into the lead-out hole, and in a radial direction of the lead-out hole, a distance between the extension portion and the sealing ring is k, where k ∈ [1.5 mm, 2.5 mm]. The provision of the sealing ring achieves the sealing of the lead-out hole. In addition, the extension portion and the sealing ring being spaced apart reduces transfer of the welding heat to the sealing ring and reduces the adverse effects of the welding heat on the sealing ring, guaranteeing the sealing effect of the sealing ring.

In some embodiments of this application, the sealing ring includes a first portion and a second portion, where the first portion is located between the terminal plate and the end cover, the second portion extends into the lead-out hole, and in the radial direction of the lead-out hole, a distance between the extension portion and the second portion is k, where k ∈ [1.5 mm, 2.5 mm]. The sealing ring being provided as the first portion and the second portion can improve the positioning effect of the sealing ring, thereby improving the sealing effect of the sealing ring.

In some embodiments of this application, the extension portion is a cylindrical structure, and the sealing ring is an annular member, where a diameter of the cylindrical structure is d1, and an inner diameter of the annular member is d2, where d1/d2 ∈ [0.75, 2.5]. The extension portion being set as the cylindrical structure and the sealing ring being set as the annular member facilitate coaxial assembly of the sealing ring and the extension portion during mounting, improving the assembly accuracy of the sealing ring. In addition, a ratio of the diameter of the cylindrical structure to the inner diameter of the annular member being set in the range of [0.75, 2.5] allows for a sufficiently large cross section of the extension portion, so that the extension portion has a large current flow area after connected to the adapting component, reducing the situation that the performance of the battery cell is affected by heating at the connection position.

In some embodiments of this application, the diameter d1 of the cylindrical structure is ∈ [12 mm, 16 mm], and the inner diameter d2 of the annular member is ∈ [15.2 mm, 20 mm].

The diameter of the cylindrical structure and the inner diameter of the annular member being set to the foregoing values further improves the mounting accuracy of the sealing ring, and allows for a large cross-sectional area of the extension portion of the cylindrical structure, further increasing the current flow area between the extension portion and the adapting component.

In some embodiments of this application, the electrode terminal further includes:
an insulating member, where the insulating member is disposed on a circumference of the terminal plate; and
a fixing member, where the fixing member is separated from the electrode terminal through the insulating member, the fixing member is connected to the insulating member and the end cover, and the fixing member is a conductive member.

The terminal plate, the insulating member, the fixing member, and the end cover are connected in sequence to connect and fix the electrode terminal to the end cover. In addition, the insulating member is used to insulate the electrode terminal from the end cover, improving safety in use.

In some embodiments of this application, the bottom surface is flat.

The bottom surface of the electrode terminal being set to be flat increases a contact area between the electrode terminal and the adapting component that are connected, improves connection strength between the electrode terminal and the adapting component, and also increases the current flow area between the electrode terminal and the adapting component, thereby reducing the situation that the performance of the battery cell is affected by heating at the connection position.

In some embodiments of this application, the end cover includes a top cover plate and an insulating plate, where the insulating plate is mounted at the bottom of the top cover plate, the lead-out hole passes through the top cover plate and the insulating plate, and the bottom surface of the electrode terminal extends beyond a surface of the insulating plate corresponding to the adapting component. The insulating plate can insulate and isolate the top cover plate from the adapting component.

A second aspect of this application proposes a battery cell including:
the end cover assembly as described above; and
an adapting component, where the adapting component covers the bottom surface of the electrode terminal and is fixed to the bottom surface by welding.

In some embodiments of this application, the adapting component is a flat plate structure, which can facilitate removal of metal shavings and manufacturing.

In some embodiments of this application, a side of the adapting component facing the electrode terminal is provided with a recess, a portion of the electrode terminal is accommodated in the recess, and the adapting component is flat at a side back away from the electrode terminal or is provided with a protrusion at a position corresponding to the recess. This facilitates removal of the metal shavings. This can also improve compactness of the internal structure of the battery cell.

In some embodiments of this application, the battery cell further includes a cell assembly, where the cell assembly includes a body portion and a tab, the adapting component connects the tab and the electrode terminal, and thickness of a portion at which the adapting component is welded to the electrode terminal is M; and
in an axial direction of the lead-out hole, a lower surface of the end cover has a first region opposite the adapting component, where a distance from the first region to the cell assembly is D, and an extension height of the bottom surface is T, where T < (D - M). Such arrangement can avoid interference between the adapting component and the body portion.

A third aspect of this application proposes a battery including the battery cell as described above.

A fourth aspect of this application proposes an electric apparatus, where the electric apparatus includes the battery cell as described above.

The foregoing description is merely an overview of the technical solutions of this application. For a better understanding of the technical means in this application such that they can be implemented according to the content of the specification, and to make the above and other objectives, features, and advantages of this application more obvious and easier to understand, the following describes specific embodiments of this application.

### BRIEF DESCRIPTION OF DRAWINGS

FIG. 1 schematically shows a schematic structural diagram of a vehicle according to an embodiment of this application;
FIG. 2 schematically shows a schematic structural diagram of a battery pack according to an embodiment of this application;
FIG. 3 schematically shows a schematic structural diagram of a battery module according to an embodiment of this application;
FIG. 4 schematically shows a schematic structural exploded view of a partial structure of a battery cell according to an embodiment of this application;
FIG. 5 schematically shows a schematic structural diagram of an end cover assembly according to an embodiment of this application;
FIG. 6 is a cross-sectional view of the end cover assembly shown in FIG. 5 along A-A (showing an adapting component);
FIG. 7 is an enlarged schematic structural diagram of Part B of the end cover assembly shown in FIG. 6;
FIG. 8 is an enlarged schematic structural diagram of Part C of the structure shown in FIG. 7 (showing a cell assembly);
FIG. 9 is an enlarged schematic structural diagram of Part C of the structure shown in FIG. 7 (not showing an adapting structure); and
FIG. 10 is a schematic structural exploded view of the end cover assembly shown in FIG. 5.

Reference signs are described as follows:
1000. vehicle;
100. battery; 200. controller; 300. motor;
110. battery module; 120. box;
121. first box portion; 122. second box portion;
10. battery cell;
1. end cover assembly;
11. end cover;
111. top cover plate; 112. insulating plate; 113. lead-out hole; 1131. first hole portion; 1132. second hole portion; 114. lower surface; 1141. first region;
12. electrode terminal;
121. extension portion; 122. terminal plate; 123. insulating member; 124. fixing member; 125. bottom surface;
13. sealing ring;
131. first portion; 132. second portion;
2. cell assembly;
3. housing; and
4. adapting component.

### DESCRIPTION OF EMBODIMENTS

The following describes in detail the embodiments of technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by persons skilled in the art to which this application belongs. The terms used herein are merely intended to describe the specific embodiments rather than to limit this application. The terms "include", "have", and any other variations thereof in the specification, claims, and brief description of drawings of this application are intended to cover non-exclusive inclusions.

In the descriptions of the embodiments of this application, the technical terms "first", "second", and the like are merely intended to distinguish between different objects, and shall not be understood as any indication or implication of relative importance or any implicit indication of the number, specific sequence, or primary-secondary relationship of the technical features indicated. In the descriptions of the embodiments of this application, "a plurality of" means more than two, unless otherwise specifically defined.

In this specification, reference to "embodiment" means that specific features, structures, or characteristics described with reference to the embodiment may be incorporated in at least one embodiment of this application. The word "embodiment" appearing in various places in this specification does not necessarily refer to the same embodiment or an independent or alternative embodiment that is exclusive of other embodiments. Persons skilled in the art explicitly and implicitly understand that the embodiments described herein may be combined with other embodiments.

In the descriptions of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between the contextually associated objects.

In the descriptions of the embodiments of this application, the term "a plurality of" means more than two (inclusive). Similarly, "a plurality of groups" means more than two (inclusive) groups, and "a plurality of pieces" means more than two (inclusive) pieces.

In the descriptions of the embodiments of this application, the orientations or positional relationships indicated by the technical terms "center", "longitudinal", "transverse", "length", "width", "thickness", "upper", "lower", "front", "rear", "left", "right", "perpendicular", "horizontal", "top", "bottom", "inside", "outside", "clockwise", "counterclockwise", "axial", "radial", "circumferential", and the like are based on the orientations or positional relationships shown in the accompanying drawings. These terms are merely for ease and brevity of the descriptions of the embodiments of this application rather than indicating or implying that the apparatuses or elements mentioned must have specific orientations or must be constructed or manipulated according to specific orientations, and therefore shall not be construed as any limitations on the embodiments of this application.

In the descriptions of the embodiments of this application, unless otherwise specified and defined explicitly, the technical terms "mount", "connect", "join", and "fix" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements. Persons of ordinary skill in the art can understand specific meanings of these terms in the embodiments of this application as appropriate to specific situations.

Currently, from the perspective of market development, application of traction batteries is being more extensive. Traction batteries have been widely used in energy storage power supply systems such as hydroelectric power plants, thermal power plants, wind power plants, and solar power plants, and many other fields including electric transportation tools such as electric bicycles, electric motorcycles, and electric vehicles, military equipment, and aerospace. With the continuous expansion of application fields of traction batteries, market demands for traction batteries are also increasing.

The applicant has noticed that a battery cell of a traction battery has an electrode terminal, a cell, and an adapting component, where the electrode terminal is electrically connected to a tab of the cell through the adapting component. In the prior art, the adapting component is fixed to the electrode terminal by welding. However, metal shavings are prone to remaining during welding, and the residual metal shavings easily lead to problems such as short circuit of the cell, increasing safety risks. Therefore, how safety risks caused by residual metal shavings are reduced has become a technical problem that needs to be solved urgently by persons skilled in the art.

To reduce safety risks caused by residual metal shavings, the applicant has found through research that because a bottom surface of the electrode terminal extends out of a lead-out hole of an end cover, an adapting component that facilitates removal of the metal shavings can be used when the electrode terminal is fixed to the adapting component by welding, reducing the residual metal shavings after welding, thereby reducing the safety risks caused by the residual metal shavings.

The battery cell disclosed in the embodiments of this application may be used without limitation in electric apparatus such as vehicles, ships, or aircrafts. The battery cell, battery, and the like disclosed in this application may be used to constitute a power supply system of that electric apparatus.

An embodiment of this application provides an electric apparatus that uses a battery as a power source. The electric apparatus may be but is not limited to a mobile phone, a tablet, a notebook computer, an electric toy, an electric tool, an electric bicycle, an electric vehicle, a ship, or a spacecraft. The electric toy may include a fixed or mobile electric toy, for example, a game console, an electric toy car, an electric toy ship, and an electric toy airplane. The spacecraft may include an airplane, a rocket, a space shuttle, a spaceship, and the like.

It should be understood that the technical solutions described in the embodiments of this application are not only applicable to the batteries and electric devices described above, but also applicable to all batteries including a box and electric devices using batteries. However, for the brevity of description, in the following embodiments, the electric vehicle is used as an example for description.

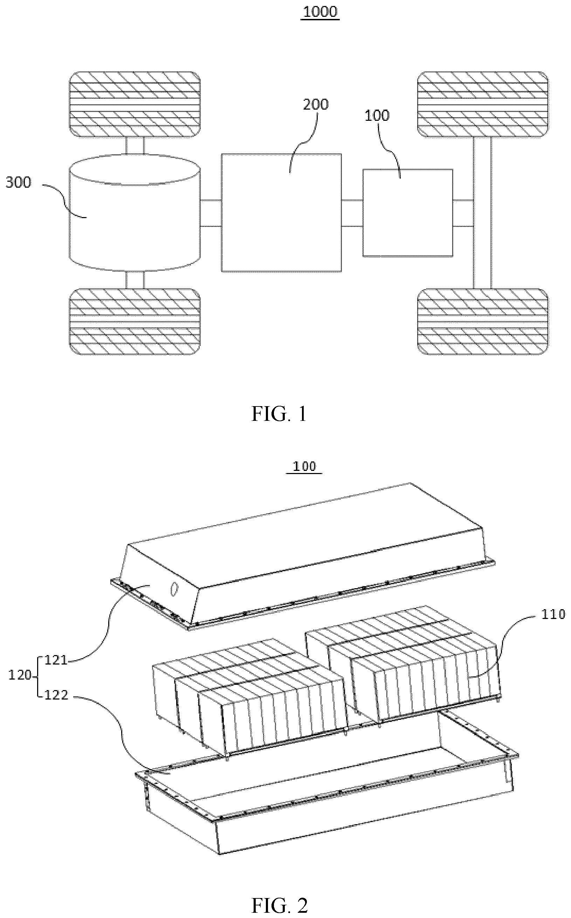

Referring to FIG. 1, FIG. 1 is a schematic structural diagram of a vehicle 1000 according to some embodiments of this application. The vehicle 1000 may be a fossil fuel vehicle, a natural gas vehicle, or a new energy vehicle. The new energy vehicle may be a battery electric vehicle, a hybrid electric vehicle, a range-extended electric vehicle, or the like. The vehicle 1000 is provided with a battery 100 inside, where the battery 100 may be disposed at the bottom, front, or rear of the vehicle 1000. The battery 100 may be configured to supply power to the vehicle 1000. For example, the battery 100 may be used as an operational power source for the vehicle 1000. The vehicle 1000 may further include a controller 200 and a motor 300, where the controller 200 is configured to control the battery 100 to supply power to the motor 300, for example, to satisfy power needs of start, navigation, and driving of the vehicle 1000.

In some embodiments of this application, the battery 100 can be used as not only the operational power source for the vehicle 1000 but also a driving power source for the vehicle 1000, replacing or partially replacing fossil fuel or natural gas to provide driving traction for the vehicle 1000.

In order to meet different requirements for power use, the battery 100 may include a plurality of battery cells. The battery cell is a smallest element constituting a battery 100 module or battery 100 pack. The plurality of battery cells can be connected in series and/or in parallel through electrode terminals for various application scenarios. The battery 100 mentioned in this application includes a battery 100 module or a battery 100 pack. The plurality of battery cells may be connected in series, parallel, or series-parallel, where being connected in series-parallel means a combination of series and parallel connections. The battery 100 may also be referred to as a battery 100 pack. In the embodiments of this application, the plurality of battery cells may be directly combined into a battery pack, or they may be first combined into battery 100 modules which are then combined into a battery 100 pack.

FIG. 2 is a schematic structural diagram of a battery 100 according to an embodiment of this application. In FIG. 2, the battery 100 may include a plurality of battery modules 110 and a box 120. The plurality of battery modules 110 are accommodated in the box 120. The box 120 is configured to accommodate the battery cells or the battery modules 110 to prevent a liquid or another foreign matter from affecting charging or discharging of the battery cells. The box 120 may be a simple three-dimensional structure such as a rectangular, cylindrical, or spherical structure or may be a complex three-dimensional structure combining simple three-dimensional structures such as rectangular, cylindrical, or spherical structures. This is not limited in the embodiments of this application. The box 120 may be made of an alloy material such as an aluminum alloy or iron alloy, a polymer material such as polycarbonate or polyisocyanurate foam, or a composite material produced from materials such as glass fiber and epoxy resin. This is not limited in the embodiments of this application either.

In some embodiments, as shown in FIG. 2, the box 120 may include a first box portion 121 and a second box portion 122. The first box portion 121 and the second box portion 122 fit together to jointly define a space for accommodating the battery cells. The second box portion 122 may be a hollow structure with an opening at one end, the first box portion 121 may be a plate-shaped structure, and the first box portion 121 covers the opening side of the second box portion 122 so that the first box portion 121 and the second box portion 122 jointly define the space for accommodating the battery cells. Alternatively, both the first box portion 121 and the second box portion 122 may be hollow structures with an opening at one side, and the opening side of the first box portion 121 is engaged with the opening side of the second box portion 122.

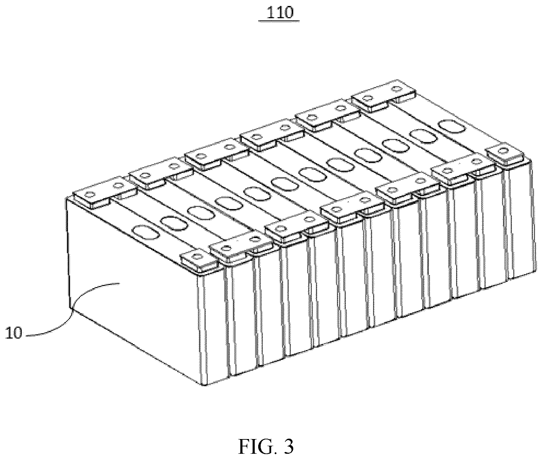

FIG. 3 is a schematic structural diagram of a battery module 110 according to an embodiment of this application. In FIG. 3, the battery module 110 may include a plurality of battery cells 10. The plurality of battery cells 10 may first be connected in series, parallel, or series-parallel to form a battery module 110, and then a plurality of battery modules 110 are connected in series, parallel, or series-parallel to form a battery. In this application, the battery cell 10 may include a lithium-ion battery, a sodium-ion battery, a magnesium-ion battery, or the like. This is not limited in the embodiments of this application. The battery cell 10 may be cylindrical, flat, rectangular, or of other shapes, which is not limited in the embodiments of this application either. The battery cells 10 are typically categorized into three types depending on their packaging: cylindrical battery cell, prismatic battery cell, and pouch battery cell, which is not limited in the embodiments of this application either. However, for the brevity of description, in the following embodiments, the prismatic battery cell is used as an example for description.

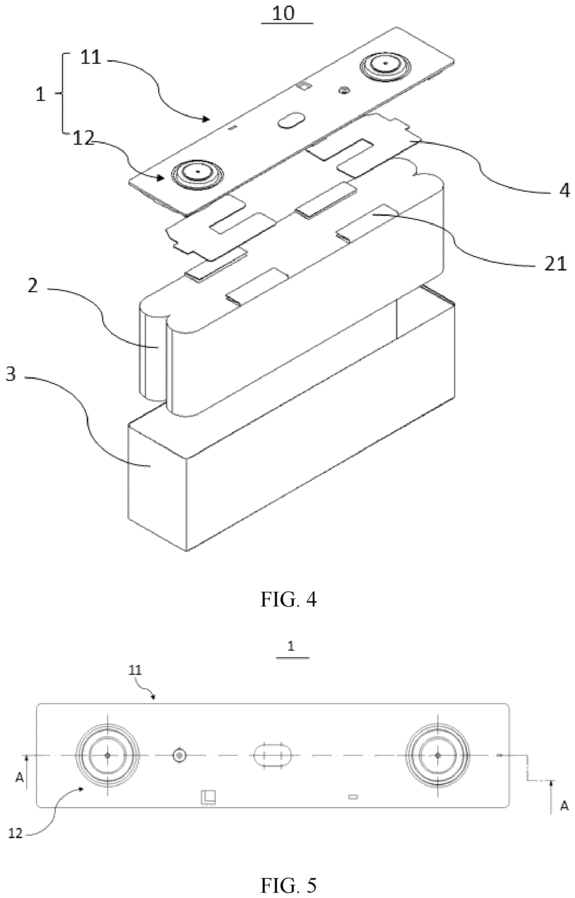

FIG. 4 is a schematic structural exploded view of a battery cell according to some embodiments of this application. The battery cell 10 is a smallest element constituting a battery. As shown in FIG. 4, the battery cell 10 includes an end cover assembly 1, a housing 3, a cell assembly 2, and an adapting component 4, where the end cover assembly 1 includes an end cover 11 and an electrode terminal 12 disposed on the end cover.

The end cover 11 is a component that covers an opening of the housing 3 to isolate an internal environment of the battery cell 10 from an external environment. Shape of the end cover 11 may be adapted to shape of the housing 3 to fit the housing 3. Optionally, the end cover 11 may be made of a material with certain hardness and strength (for example, aluminum alloy), so that the end cover 11 is less likely to deform when subjected to extrusion and collision, allowing the battery cell 10 to have higher structural strength and enhanced safety performance.

The housing 3 is an assembly configured to form the internal environment of the battery cell 10 together with the end cover 11, where the formed internal environment may be configured to accommodate the cell assembly 2, an electrolyte (not shown in the figure), and other components. The housing 3 and the end cover 11 may be separate components, an opening may be provided on the housing 3, and the end cover 11 covers the opening to form the internal environment of the battery cell 10. The housing 3 may be of various shapes and sizes, such as a rectangular shape, a cylindrical shape, and a hexagonal prism shape. Specifically, the shape of the housing 3 may be determined according to a specific shape and size of the cell assembly 2. The housing 3 may be made of various materials, such as copper, iron, aluminum, stainless steel, aluminum alloy, and plastic, which are not particularly limited in the embodiments of this application.

The cell assembly 2 is a component in which electrochemical reactions take place in the battery cell 10. The housing 3 may include one or more cell assemblies 2. The cell assembly 2 is mainly formed by winding or stacking a positive electrode plate and a negative electrode plate, and a separator is generally provided between the positive electrode plate and the negative electrode plate. Portions of the positive electrode plate and the negative electrode plate that have active substances constitute a body portion of the cell assembly 2, while portions of the positive electrode plate and the negative electrode plate that have no active substances each constitute a tab (not shown in the figure). A positive tab and a negative tab may both be located at one end of the body portion or be located at two ends of the body portion respectively.

The electrode terminal 12 is a component that is disposed on the end cover 11 and is configured to be electrically connected to the cell assembly 2 for outputting or inputting electrical energy of the battery cell. The electrode terminal 12 is electrically connected to the tab of the cell assembly 2 through the adapting component (not shown in the figure). During charging and discharging of the battery, a positive electrode active substance and a negative electrode active substance react with the electrolyte, and the tabs are connected to the electrode terminals to form a current loop.

The adapting component is a conductive component, and the electrode terminal 12 is electrically connected through the adapting component. For example, the adapting component is generally connected to the electrode terminal 12 by laser welding. Material of the adapting component includes but is not limited to nickel-plated copper or nickel strip. Due to the advantages such as good spot welding effect, low internal resistance, oxidation resistance, and corrosion resistance of nickel-plated copper or nickel strip, an adapting component made of nickel-plated copper or nickel strip allows the battery pack to have longer discharge time and better discharge effect.

As shown in FIG. 4 to FIG. 10, this application proposes an end cover assembly 1 applied to a battery cell 10. The end cover assembly 1 includes an end cover 11 and an electrode terminal 12. The end cover 11 is provided with a lead-out hole 113. The electrode terminal 12 is mounted on the end cover 11, a portion of the electrode terminal 12 passes through the lead-out hole 113, and a bottom surface 125 of the electrode terminal 12 extends out of the lead-out hole 113 and is used to be fixed to an adapting component 4 of the battery cell 10 by welding.

The bottom surface 125 of the electrode terminal 12 refers to a surface of the electrode terminal 12 away from the outside of the end cover. After the end cover assembly 1 is mounted on the housing 3 of the battery cell 10, the electrode terminal 12 is located inside the battery cell 10 and faces a side surface of the cell assembly. In addition, the bottom surface 125 of the electrode terminal 12 is also used to be fixed to the adapting component 4 by welding.

The lead-out hole 113 refers to a hole-like structure opened on the end cover 11, and two opposite sides of the end cover 11 can communicate with each other through the hole-like structure. Shape of the lead-out hole 113 may be circular, rectangular, triangular, rhombic, or the like. In addition, shape of the body of the electrode terminal 12 located in the lead-out hole 113 is consistent with the shape of the lead-out hole 113, so as to facilitate insertion and removal of the electrode terminal 12 in the lead-out hole 113.

A portion of the electrode terminal 12 passing through the lead-out hole 113 means that the electrode terminal 12 passes through the lead-out hole 113, and a portion of the body of the electrode terminal 12 is located inside the lead-out hole 113 and a portion of the body of the electrode terminal 12 is located outside the lead-out hole 113.

Being fixed by welding means that the adapting component 4 is connected and fixed to the electrode terminal 12 by welding.

In the prior art, the adapting component 4 is provided with a protrusion at a position corresponding to the lead-out hole 113. When the adapting component 4 is connected to the electrode terminal 12, the protrusion enters the lead-out hole 113 and abuts against the electrode terminal 12. During the process of welding the adapting component 4 to the electrode terminal 12, metal shavings are generated. Due to a small size of a profiling structure, the removal effect cannot be guaranteed during removal of the metal shavings, and the metal shavings are highly prone to remaining. After the residual metal shavings enter the housing 3 of the battery cell 10, the metal shavings pierce the separator of the cell assembly, leading to short circuit of the cell assembly.

In this application, when the end cover assembly 1 is applied to the battery cell 10 and connected to the adapting component 4 of the battery cell 10, because the bottom surface 125 of the electrode terminal 12 protrudes from the lead-out hole 113, the adapting component 4 that facilitates removal of the metal shavings can be used when the electrode terminal 12 is fixed to the adapting component 4 by welding, reducing the residual metal shavings after welding, thereby reducing the safety risks caused by the residual metal shavings.

It should be understood that when the bottom surface 125 of the electrode terminal 12 protrudes from the lead-out hole 113, the adapting component 4 does not need to extend into the lead-out hole 113. After the electrode terminal 12 is fixed to the adapting component 4 by welding, the adapting component 4 does not enter the lead-out hole 113 during removal of the metal shavings after welding. As compared with the existing adapting component 4 with a profiling structure, the removal effect is better, preventing the metal shavings from remaining inside the profiling structure, thereby improving the removal effect on the metal shavings.

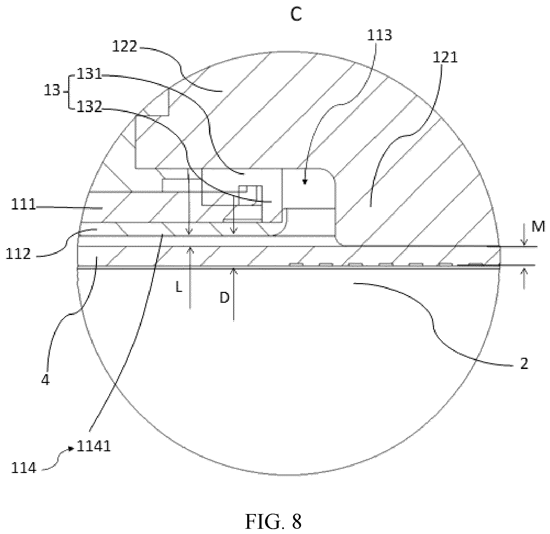

In some embodiments of this application, as shown in FIG. 8, in an axial direction of the lead-out hole 113, a lower surface 114 of the end cover 11 has a first region 1141 opposite the adapting component 4, the adapting component 4 and the first region 1141 being spaced apart.

The lower surface 114 of the end cover 11 refers to a side surface of the end cover 11. After the end cover assembly 1 is mounted on the housing 3 of the battery cell 10, the lower surface 114 faces the inside of the battery cell 10.

The first region 1141 is formed on the lower surface 114 of the end cover 11, and may be a portion of the lower surface 114 or the entire lower surface 114.

Specifically, the lead-out hole 113 is formed in the first region 1141. When the electrode terminal 12 is mounted in place on the end cover 11, the bottom surface 125 of the electrode terminal 12 protrudes from the lead-out hole 113. In this case, the bottom surface 125 of the electrode terminal 12 also protrudes from the first region 1141. After the electrode terminal 12 is connected to the adapting component 4, the first region 1141 and the adapting component 4 being spaced apart allows for sufficient space between the adapting component 4 and the end cover 11 to accommodate the protruding portion of the electrode terminal 12. In addition, the adapting component 4 and the first region 1141 of the end cover being spaced apart can avoid interference between the adapting component 4 and the end cover 11, improving stability of welding between the adapting component 4 and the electrode terminal 12.

In some embodiments of this application, as shown in FIG. 8, in the axial direction of the lead-out hole 113, a distance between the adapting component 4 and the first region 1141 is L, where 0 mm < L ≤ 0.3 mm.

Specifically, when the distance between the adapting component 4 and the lower surface 114 is greater than 0 mm and less than or equal to 0.3 mm, the adapting component 4 and the lower surface 114 can be spaced apart, so as to reduce transfer of welding heat to the end cover 11, reducing adverse effects of the welding heat on the end cover 11.

It should be noted that in this application, the value of the distance between the adapting component 4 and the lower surface 114 may be any one among 0.05 mm, 0.1 mm, 0.15 mm, 0.2 mm, 0.25 mm, ..., and 0.3 mm.

In addition, the distance between the adapting component 4 and the first region 1141 is L, where L refers to the shortest distance between the adapting component 4 and the region. For example, when both are flat structures, in the axial direction of the lead-out hole, the distance between them is L. For another example, when one is an inclined structure and the other is a flat structure, in the axial direction of the lead-out hole 113, the distance between the flat structure and the inclined structure at their closest positions is L.

In some embodiments of this application, an extension height of the bottom surface 125 is T, where T ∈ [0.05 mm, 1 mm].

The extension height of the bottom surface 125 refers to a distance between the bottom surface 125 of the electrode terminal 12 and the opening of the lead-out hole 113 in the axial direction of the lead-out hole 113 in the case of the bottom surface 125 of the electrode terminal 12 protruding outside the lead-out hole 113. The extension height of the bottom surface 125 is T, where T is the shortest distance between the bottom surface 125 and the opening of the lead-out hole 113. For example, when both are flat structures and the bottom surface 125 is flat, in the axial direction of the lead-out hole, the distance between the bottom surface 125 and the opening of the lead-out hole is T. For another example, when one is an inclined structure and the other is a flat structure, in the axial direction of the lead-out hole 113, the distance between the flat structure and the inclined structure at their closest positions is L.

Specifically, the value of the extension height of the bottom surface 125 of the electrode terminal 12 relative to the lead-out hole 113 is set in the range of [0.05 mm, 1 mm]. In the process of fixing the electrode terminal 12 to the adapting component 4 by welding, this reduces adverse effects of heat generated during fixing by welding on the end cover 11 while facilitating removal of the metal shavings, and also reduces the space occupied by the electrode terminal 12.

It should be understood that when the extension height of the bottom surface 125 of the electrode terminal 12 is larger, the bottom surface 125 of the electrode terminal 12 is farther away from the opening of the lead-out hole 113 of the end cover 11, resulting in better blocking effect on the welding heat but larger internal space occupied in the battery cell 10 in this case. When the extension height of the bottom surface 125 of the electrode terminal 12 is smaller, the bottom surface 125 of the electrode terminal 12 is closer to the opening of the lead-out hole 113, resulting in worse blocking effect on the welding heat but smaller internal space occupied in the battery cell 10 in this case. Therefore, the value of the extension height of the bottom surface 125 of the electrode terminal 12 relative to the lead-out hole 113 being set in the range of [0.05 mm, 1 mm] effectively reduces the internal space occupied in the battery cell 10 while effectively preventing transfer of the welding heat.

Further, when the protrusion height of the bottom surface 125 of the electrode terminal 12 is less than 0.05 mm, in the process of fixing the electrode terminal 12 to the adapting component 4 by welding, the welding heat is transferred to the end cover 11, causing the undesirable situations such as deformation of the end cover 11 due to heating. When the protrusion height of the bottom surface 125 of the electrode terminal 12 is greater than 1 mm, the electrode terminal 12 has an excessive extension length to the inside of the battery cell 10, and thus occupies the internal space of the battery cell 10, which is not conducive to the layout of the internal structure of the battery cell 10.

It should be noted that in this application, the value of the protrusion height of the bottom surface 125 of the electrode terminal 12 may be any one of 0.05 mm, 0.10 mm, 0.15 mm, 0.20 mm, 0.25 mm, 0.30 mm, 0.35 mm, 0.40 mm, 0.45 mm, 0.50 mm, 0.55 mm, 0.60 mm, 0.65 mm, 0.70 mm, 0.75 mm, 0.80 mm, 0.85 mm, 0.90 mm, 0.95 mm, ..., and 1.00 mm.

In some embodiments of this application, the protrusion height T of the bottom surface 125 of the electrode terminal 12 is 0.2 mm or 0.3 mm.

In some of these embodiments, the protrusion height of the bottom surface 125 of the electrode terminal 12 is 0.2 mm. The value of the protrusion height of the bottom surface 125 of the electrode terminal 12 being set to 0.2 mm effectively reduces the protrusion height of the electrode terminal 12 while ensuring that the welding heat between the electrode terminal 12 and the adapting component 4 is not transferred to the end cover 11, reducing adverse effects on the internal space of the battery cell 10.

In some of these embodiments, the protrusion height of the bottom surface 125 of the electrode terminal 12 is 0.3 mm. The protrusion height of the bottom surface 125 of the electrode terminal 12 being set to 0.3 mm allows the bottom surface 125 of the electrode terminal 12 to be farther away from the end cover 11 while ensuring that the electrode terminal 12 has little effect on the internal space of the battery cell 10, reducing transfer of the welding heat between the electrode terminal 12 and the adapting component 4 to the end cover 11.

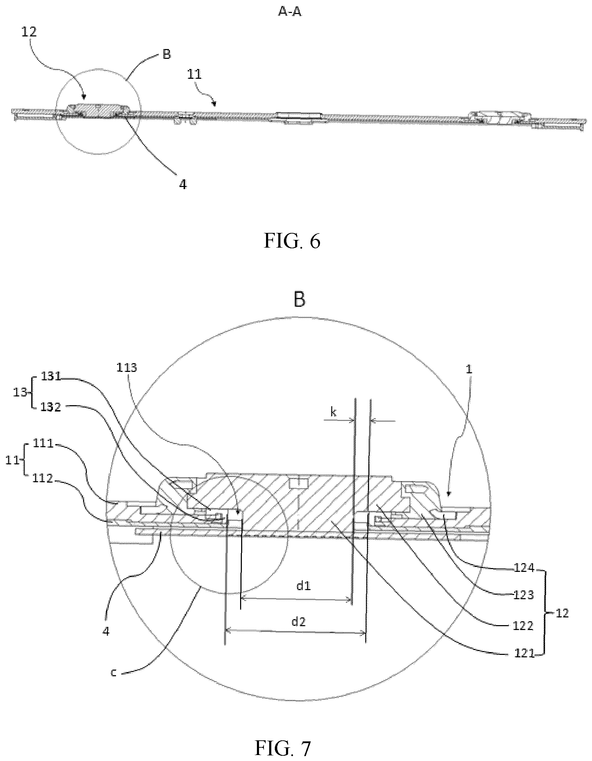

In some embodiments of this application, as shown in FIG. 7 to FIG. 9, the electrode terminal 12 includes a terminal plate 122 and an extension portion 121, where the terminal plate 122 is located at a side of the end cover 11 and covers the lead-out hole 113, the end cover assembly 1 further includes a sealing ring 13, at least a portion of the sealing ring 13 is located between the terminal plate 122 and the end cover 11 to seal the lead-out hole 113, the extension portion 121 extends into the lead-out hole 113, and in a radial direction of the lead-out hole 113, as shown in FIG. 7, a distance between the extension portion 121 and the sealing ring 13 is k, where k ∈ [1.5 mm, 2.5 mm].

Specifically, the electrode terminal 12 has the terminal plate 122 and the extension portion 121 that are connected, where the extension portion 121 passes through the lead-out hole 113 of the end cover 11, the terminal plate 122 is located outside the lead-out hole 113 and covers the lead-out hole 113, the bottom surface 125 of the electrode terminal 12 is formed on the extension portion 121, an end of the extension portion 121 having the bottom surface 125 extends out of the lead-out hole 113, the sealing ring 13 fits radially outward the extension portion 121, and a portion of the sealing ring 13 seals the terminal plate 122 and the end cover 11.

The provision of the sealing ring 13 achieves the sealing of the lead-out hole 113, effectively realizing internal and external isolation of the battery cell 10. In addition, the extension portion 121 and the sealing ring 13 being spaced apart reduces transfer of the welding heat to the sealing ring 13 and reduces the adverse effects of the welding heat on the sealing ring 13, guaranteeing the sealing effect of the sealing ring 13.

In addition, the value of the distance between the extension portion 121 and the sealing ring 13 being set in the range of [1.5 mm, 2.5 mm] allows for a desirable gap between the sealing ring 13 and the extension portion 121, preventing transfer of heat to the sealing ring 13 in the process of fixing the electrode terminal 12 to the adapting component 4 by welding. Based on this, the structure is more compact, preventing the structure from occupying the space of the battery cell 10.

It should be noted that when the distance k between the extension portion 121 and the sealing ring 13 is less than 1.5 mm, the gap between the sealing ring 13 and the extension portion 121 is small, and the small gap is prone to causing transfer of the welding heat to the sealing ring 13 during welding of the electrode terminal 12 and the adapting component 4, which easily leads to damage to the sealing ring 13 and inconvenient mounting of the sealing ring 13. When the gap between the extension portion 121 and the sealing ring 13 is greater than 2.5 mm, the gap between the sealing ring 13 and the extension portion 121 is large, and the large gap causes displacement in the radial direction of the sealing ring 13, which is prone to resulting in lower mounting accuracy.

It should be noted that in this application, the value of the distance between the extension portion 121 and the sealing ring 13 may be any one of 1.5 mm, 1.6 mm, 1.7 mm, 1.8 mm, 1.9 mm, 2.0 mm, 2.1 mm, 2.2 mm, 2.3 mm, 2.4 mm, ..., and 2.5 mm.

In some embodiments of this application, the distance k between the extension portion 121 and the sealing ring 13 is 1.6 mm or 2 mm.

In some of these embodiments, the distance between the extension portion 121 and the sealing ring 13 is 1.6 mm. The value of the distance between the extension portion 121 and the sealing ring 13 being set to 1.6 mm ensures effective mounting of the sealing ring 13 and the extension portion 121, blocks the welding heat, and also allows the structure to be more compact, reducing the space occupied on the battery cell 10.

In some of these embodiments, the distance between the extension portion 121 and the sealing ring 13 is 2 mm. The value of the distance between the extension portion 121 and the sealing ring 13 being set to 2 mm appropriately increases the value of the preset gap, and can increase the distance between the extension portion 121 and the sealing ring 13, which further improves the blocking effect on the welding heat and also facilitates the positioning operation during assembly.

In some embodiments of this application, as shown in FIG. 7 to FIG. 9, the sealing ring 13 includes a first portion 131 and a second portion 132, where the first portion 131 is located between the terminal plate 122 and the end cover 11, the second portion 132 extends into the lead-out hole 113, and in the radial direction of the lead-out hole 113, a distance between the extension portion 121 and the second portion 132 is k, where k ∈ [1.5 mm, 2.5 mm].

Specifically, in the radial direction of the lead-out hole 113, size of the terminal plate 122 is larger than size of the lead-out hole 113, size of the extension portion 121 is smaller than the size of the lead-out hole 113, and the sealing ring 13 fits outside the extension portion 121. After the electrode terminal 12 is mounted in place, the first portion 131 of the sealing ring 13 is compressed between the terminal plate 122 and the end cover 11, and the second portion 132 of the sealing ring 13 is provided in the lead-out hole 113 and is fitted to a hole wall of the lead-out hole 113 (spaced apart from the extension portion 121). The sealing ring 13 being provided as the first portion 131 and the second portion 132 can improve the positioning effect of the sealing ring 13, thereby improving the sealing effect of the sealing ring 13.

It should be understood that the value of the distance between the extension portion 121 and the second portion 132 being set in the range of [1.5 mm, 2.5 mm] allows for a desirable gap between the second portion 132 and the extension portion 121, preventing transfer of heat to the sealing ring 13 in the process of fixing the electrode terminal 12 to the adapting component 4 by welding. Based on this, the mounting accuracy can also be effectively improved.

In some embodiments of this application, as shown in FIG. 7, the extension portion 121 is a cylindrical structure, and the sealing ring 13 is an annular member, where a diameter of the cylindrical structure is d1, and an inner diameter of the annular member is d2, where d1/d2 ∈ [0.75, 2.5].

Specifically, the extension portion 121 being set as the cylindrical structure and the sealing ring 13 being set as the annular member facilitate coaxial assembly of the sealing ring 13 and the extension portion 121 during mounting, improving the assembly accuracy of the sealing ring 13. In addition, a ratio of the diameter of the cylindrical structure to the inner diameter of the annular member being set in the range of [0.75, 2.5] allows for a sufficiently large cross section of the extension portion 121, so that the extension portion 121 has a large current flow area after connected to the adapting component 4, reducing the situation that the performance of the battery cell 10 is affected by heating at the connection position.

It should be understood that the extension portion 121 being set as the cylindrical structure and the sealing ring 13 being set as the annular member facilitate their processing during manufacturing, improving the processing efficiency. In addition, during assembly of the cylindrical structure and the annular member, a sleeve is needed as an auxiliary tool for mounting. The sealing ring 13 fits around the sleeve, and the extension portion 121 is inserted into the sleeve, such that the sealing ring 13 and the extension portion 121 can be coaxially arranged quickly using the sleeve, so as to achieve positioning and mounting of the sealing ring 13 and the electrode terminal 12, thereby improving the mounting accuracy.

In addition, when the mounting accuracy of the sealing ring 13 and the extension portion 121 is satisfied, heat during welding can be effectively blocked, preventing transfer of the welding heat from the extension portion 121 to the sealing ring 13, thereby effectively protecting the sealing ring 13.

It should be noted that in this application, the value of d1/d2 may be any one of 0.75, 1, 1.25, 1.5, 1.75, 2.0, 2.25, ..., and 2.5.

In some embodiments of this application, the diameter d1 of the cylindrical structure is ∈ [12 mm, 16 mm], and the inner diameter d2 of the annular member is ∈ [15.2 mm, 20 mm].

Specifically, the diameter of the cylindrical structure and the inner diameter of the annular member being set to the foregoing values further improves the mounting accuracy of the sealing ring 13, and allows for a large cross-sectional area of the extension portion 121 of the cylindrical structure, further increasing the current flow area between the extension portion 121 and the adapting component 4.

It should be noted that in this application, the value of d1 may be any one of 12 mm, 13 mm, 14 mm, 15 mm, ..., and 16 mm. The value of d1 may be any one of 15.2 mm, 15.5 mm, 16 mm, 16.5 mm, ..., and 20 mm.

In some embodiments of this application, the diameter d1 of the cylindrical structure is 12 mm, and the inner diameter d2 of the annular member is 15.2 mm, where d1/d2 = 0.79; or the diameter d1 of the cylindrical structure is 16 mm, and the inner diameter d2 of the annular member is 20 mm, where d1/d2 = 0.8.

In some of these embodiments, the diameter d1 of the cylindrical structure is 12 mm, and the inner diameter d2 of the annular member is 15.2 mm, where d1/d2 = 0.79, so that the sealing ring 13 of the annular member and the extension portion 121 of the cylindrical structure can meet the insertion requirement of the sleeve (auxiliary mounting tool), thereby guaranteeing the mounting accuracy of the sealing ring 13. In addition, this allows for a large cross-sectional area of the extension portion 121 of the cylindrical structure, increasing the current flow area between the extension portion 121 and the adapting component 4, thereby reducing the undesirable situations such as de-welding due to excessive heat during use.

In some of these embodiments, the diameter d1 of the cylindrical structure is set to 16 mm, and the inner diameter d2 of the annular member is set to 20 mm, where d1/d2 = 0.8, so that the sealing ring 13 of the annular member and the extension portion 121 of the cylindrical structure can meet the insertion requirement of the sleeve, thereby guaranteeing the mounting accuracy of the sealing ring 13. In addition, this allows for a larger cross-sectional area of the extension portion 121 of the cylindrical structure, further increasing the current flow area between the extension portion 121 and the adapting component 4, thereby further reducing the undesirable situations such as de-welding due to excessive heat during use.

In some embodiments of this application, as shown in FIG. 7 to FIG. 10, the electrode terminal 12 further includes an insulating member 123 and a fixing member 124, where the insulating member 123 is disposed on a circumference of the terminal plate 122; and the fixing member 124 is separated from the electrode terminal 12 through the insulating member 123, the fixing member 124 is connected to the insulating member 123 and the end cover 11, and the fixing member 124 is a conductive member.

Specifically, the terminal plate 122, the insulating member 123, the fixing member 124, and the end cover 11 are connected in sequence to connect and fix the electrode terminal 12 to the end cover 11. In addition, the insulating member 123 is used to insulate the electrode terminal 12 from the end cover 11, improving safety in use.

It should be noted that in this application, the fixing member 124 is a welding ring, and the insulating member 123 is plastic. The electrode terminal 12, the welding ring, and the plastic can be assembled and then mounted onto the end cover 11. During assembly, the welding ring is pressed onto the electrode terminal 12, and the plastic is injected into a gap between the welding ring and the electrode terminal 12 by injection molding, thereby achieving connection and fixation of the welding ring and the electrode terminal 12.

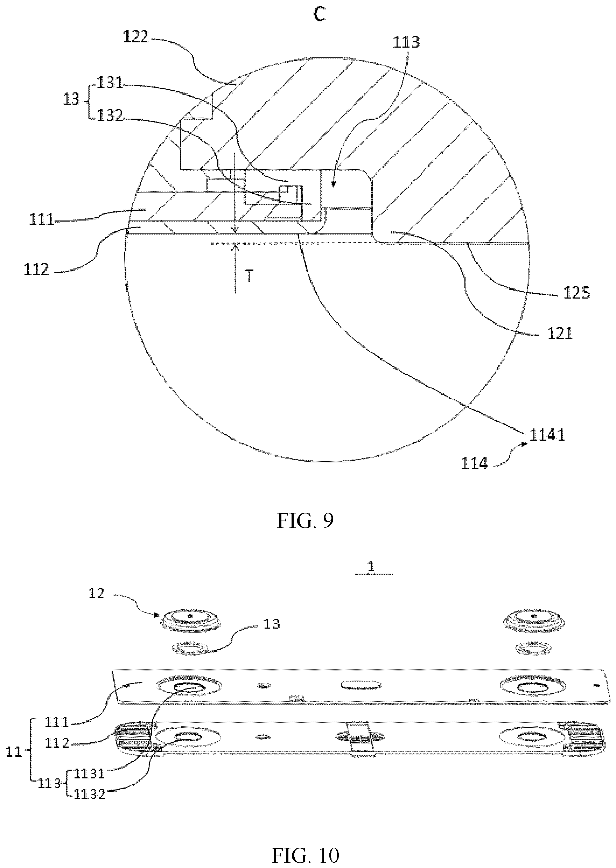

In some embodiments of this application, as shown in FIG. 9, the bottom surface 125 is flat.

Specifically, the bottom surface 125 of the electrode terminal 12 is connected and fixed to the adapting component 4 of the battery cell 10 by welding. To reduce the residual metal shavings after welding, the bottom surface 125 of the electrode terminal 12 extends out of the lead-out hole 113, so as to use the adapting component 4 of a flat structure. When the electrode terminal 12 is fixed to the adapting component 4 by welding, the bottom surface 125 of the electrode terminal 12 abuts against a large surface of the adapting component 4, and the electrode terminal 12 and the adapting component 4 are connected and fixed by welding.

The bottom surface 125 of the electrode terminal 12 being set to be flat increases a contact area between the electrode terminal 12 and the adapting component 4 that are connected, improves connection strength between the electrode terminal 12 and the adapting component 4, and also increases the current flow area between the electrode terminal 12 and the adapting component 4, thereby reducing the situation that the performance of the battery cell 10 is affected by heating at the connection position.

It can be understood that in some embodiments, the bottom surface 125 may be inclined or curved, and the bottom surface 125 is also provided with a recess.

In some of these embodiments, the end cover 11 is an integral structure, the end cover 11 itself is the insulating member 123, and the lead-out hole 113 is opened on the end cover 11.

In some of these embodiments, as shown in FIG. 7 to FIG. 10, the end cover 11 is a separate structure, including a top cover plate 111 and an insulating plate 112. The top cover plate 111 is connected and fixed to the insulating plate 112 by adhering, fasteners, riveting, welding, or the like. When the end cover 11 is mounted on the housing 3 of the battery cell 10, the top cover plate 111 faces away from the inside of the housing 3, and the insulating plate 112 faces the inside of the housing 3. A first hole portion 1131 is opened on the top cover plate 111 and a second hole portion 1132 is opened on the insulating plate 112. After the top cover plate 111 is connected to the insulating plate 112, the first hole portion 1131 and the second hole portion 1132 overlap to form the lead-out hole 113.

In some embodiments, the first hole portion 1131 and the second hole portion 1132 may be coaxially provided. The first hole portion 1131 and the second hole portion 1132 being coaxially provided makes the structure of the lead-out hole 113 more convenient for the assembly of the electrode terminal 12.

Further, an opening of the first hole portion 1131 has a first flanging protruding toward the insulating plate 112, and an opening of the second hole portion 1132 has a second flanging protruding toward the top cover plate 111. In the radial direction of the lead-out hole 113, size of the first flanging is larger than size of the second flanging. After the top cover plate 111 is connected and fixed to the insulating plate 112, the first flanging abuts radially outward against the second flanging, and an end of the second portion 132 of the sealing ring 13 close to the inside of the housing 3 abuts against the insulating plate 112 and is located between the first flanging and the second flanging, such that the top cover plate 111 and the insulating plate 112 are effectively sealed using the second portion 132.

A second aspect of this application proposes a battery cell 10 including the end cover assembly 1 and adapting component 4 as described above, where the adapting component 4 covers the bottom surface 125 of the electrode terminal 12 and is fixed to the bottom surface 125 by welding.

In some embodiments of this application, as shown in FIG. 4, FIG. 6, FIG. 7, and FIG. 8, the adapting component 4 is a flat plate structure, which can facilitate removal of the metal shavings and manufacturing.

In some embodiments of this application, a side of the adapting component 4 facing the electrode terminal 12 is provided with a recess, a portion of the electrode terminal 12 is accommodated in the recess, and the adapting component 4 is flat at a side back away from the electrode terminal or is provided with a protrusion at a position corresponding to the recess. This facilitates removal of the metal shavings. This can also improve compactness of the internal structure of the battery cell 10.

In some embodiments of this application, as shown in FIG. 4, the battery cell 10 further includes a cell assembly 2, where the cell assembly 2 includes a body portion 22 and a tab 21, and the adapting component 4 connects the tab 21 and the electrode terminal 12. As shown in FIG. 8, thickness of a portion at which the adapting component 4 is welded to the electrode terminal 12 is M. In an axial direction of the lead-out hole 113, a lower surface 114 of the end cover 11 has a first region 1141 opposite the adapting component 4, where a distance from the first region 1141 to the cell assembly 2 is D, and an extension height of the bottom surface 125 is T, where T < (D - M). Such arrangement can avoid interference between the adapting component and the body portion.

In some embodiments of this application, as shown in FIG. 9, the extension height of the bottom surface 125 of the electrode terminal 12 is T, where T ∈ [0.05 mm, 1 mm]. The value of the extension height of the bottom surface 125 of the electrode terminal 12 relative to the lead-out hole 113 is set in the range of [0.05 mm, 1 mm]. In the process of fixing the electrode terminal 12 to the adapting component 4 by welding, this reduces adverse effects of heat generated during fixing by welding on the end cover while facilitating removal of the metal shavings, and also reduces the space occupied by the electrode terminal 12.

A third aspect of this application proposes a battery, including the battery cell 10 as described above.

A fourth aspect of this application proposes an electric apparatus, where the electric apparatus includes the battery cell 10 as described above.

The foregoing description is merely an overview of the technical solutions of this application. For a better understanding of the technical means in this application such that they can be implemented according to the content of the specification, and to make the above and other objectives, features, and advantages of this application more obvious and easier to understand, the following describes specific embodiments of this application.

In the embodiments of this application, as shown in FIG. 4 to FIG. 10, this application proposes an end cover assembly 1, and the end cover assembly 1 includes an end cover 11, a sealing ring 13, and an electrode terminal 12. The end cover 11 includes a top cover plate 111 and an insulating plate 112, and the end cover 11 formed by the top cover plate 111 and the insulating plate 112 is provided with a lead-out hole 113. The electrode terminal 12 includes a terminal plate 122, an extension portion 121, an insulating member 123 (for example, plastic), and a fixing member 124 (for example, a welding ring). The sealing ring 13 includes a first portion 131 and a second portion 132. The fixing member 124 fits radially outward the terminal plate 122, and the insulating member 123 is filled between the terminal plate 122 and the fixing member 124. When the electrode terminal 12 is assembled with the end cover 11, the sealing ring 13 fits with the top cover plate 111, such that the first portion 131 of the sealing ring 13 abuts against the top cover plate 111, and the second portion 132 of the sealing ring 13 is inserted into the lead-out hole 113 and is fitted to an inner wall of the lead-out hole 113; and the extension portion 121 of the electrode terminal 12 is inserted into the sealing ring 13, such that the terminal plate 122 abuts against the first portion 131 of the sealing ring 13, where a distance between the extension portion 121 and the second portion 132 of the sealing ring 13 is k, where k ∈ [1.5 mm, 2.5 mm]. Then, the fixing member 124 is connected and fixed to the top cover plate 111. Finally, the insulating member 123 is connected and fixed to the top cover plate 111. The bottom surface 125 of the assembled electrode terminal 12 extends out of the lead-out hole 113, and the extension height is T, where T ∈ [0.05 mm, 1 mm]. In addition, the extension portion 121 is a cylindrical structure, and the second portion 132 of the sealing ring 13 is an annular member, where a diameter of the cylindrical structure is d1, and an inner diameter of the annular member is d2, where d1/d2 ∈ [0.75, 2.5].

In this application, when the end cover assembly 1 is applied to the battery cell 10 and connected to the adapting component 4 of the battery cell 10, because the bottom surface 125 of the electrode terminal 12 protrudes from the lead-out hole 113, the adapting component 4 that facilitates removal of the metal shavings can be used when the electrode terminal 12 is fixed to the adapting component 4 by welding, reducing the residual metal shavings after welding, thereby reducing the safety risks caused by the residual metal shavings.

In conclusion, it should be noted that the foregoing embodiments are for description of the technical solutions of this application only rather than for limiting this application. Although this application has been described in detail with reference to the foregoing embodiments, persons of ordinary skill in the art should appreciate that they can still make modifications to the technical solutions described in the foregoing embodiments or make equivalent replacements to some or all technical features thereof without departing from the scope of the technical solutions in the embodiments of this application. All such modifications and equivalent replacements shall fall within the scope of claims and specification of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. An end cover assembly, applied to a battery cell and **characterized in that** the end cover assembly comprises:
an end cover, wherein the end cover is provided with a lead-out hole; and
an electrode terminal, wherein the electrode terminal is mounted on the end cover, a portion of the electrode terminal passes through the lead-out hole, and a bottom surface of the electrode terminal extends out of the lead-out hole and is used to be fixed to an adapting component of the battery cell by welding.

2. The end cover assembly according to claim 1, **characterized in that** in an axial direction of the lead-out hole, a lower surface of the end cover has a first region opposite the adapting component, the adapting component and the first region being spaced apart.

3. The end cover assembly according to claim 2, **characterized in that** in the axial direction of the lead-out hole, a distance between the adapting component and the first region is L, wherein 0 mm < L ≤ 0.3 mm.

4. The end cover assembly according to any one of claims 1 to 3, **characterized in that** an extension height of the bottom surface is T, wherein T ∈ [0.05 mm, 1 mm].

5. The end cover assembly according to any one of claims 1 to 4, **characterized in that** the electrode terminal comprises a terminal plate and an extension portion, wherein the terminal plate is located at a side of the end cover and covers the lead-out hole, the end cover assembly further comprises a sealing ring, at least a portion of the sealing ring is located between the terminal plate and the end cover to seal the lead-out hole, the extension portion extends into the lead-out hole, and in a radial direction of the lead-out hole, a distance between the extension portion and the sealing ring is k, wherein k ∈ [1.5 mm, 2.5 mm].

6. The end cover assembly according to claim 5, **characterized in that** the sealing ring comprises a first portion and a second portion, wherein the first portion is located between the terminal plate and the end cover, the second portion extends into the lead-out hole, and in the radial direction of the lead-out hole, a distance between the extension portion and the second portion is k, wherein k ∈ [1.5 mm, 2.5 mm].

7. The end cover assembly according to claim 5 or 6, **characterized in that** the extension portion is a cylindrical structure, and the sealing ring is an annular member, wherein a diameter of the cylindrical structure is d1, and an inner diameter of the annular member is d2, wherein d1/d2 ∈ [0.75, 2.5].

8. The end cover assembly according to claim 7, **characterized in that** the diameter d1 of the cylindrical structure is ∈ [12 mm, 16 mm], and the inner diameter d2 of the annular member is ∈ [15.2 mm, 20 mm].

9. The end cover assembly according to any one of claims 5 to 8, **characterized in that** the electrode terminal further comprises:
an insulating member, wherein the insulating member is disposed on a circumference of the terminal plate; and
a fixing member, wherein the fixing member is separated from the electrode terminal through the insulating member, the fixing member is connected to the insulating member and the end cover, and the fixing member is a conductive member.

10. The end cover assembly according to any one of claims 1 to 9, **characterized in that** the bottom surface is flat.

11. The end cover assembly according to any one of claims 1 to 10, **characterized in that** the end cover comprises:
a top cover plate, and
an insulating plate, wherein the insulating plate is mounted at the bottom of the top cover plate, the lead-out hole passes through the top cover plate and the insulating plate, and the bottom surface of the electrode terminal extends beyond a surface of the insulating plate corresponding to the adapting component.

12. A battery cell, **characterized by** comprising:
the end cover assembly according to any one of claims 1 to 11; and
an adapting component, wherein the adapting component covers the bottom surface of the electrode terminal and is fixed to the bottom surface by welding.

13. The battery cell according to claim 12, **characterized in that** the adapting component is a flat plate structure; or
a side of the adapting component facing the electrode terminal is provided with a recess, a portion of the electrode terminal is accommodated in the recess, and the adapting component is flat at a side back away from the electrode terminal or is provided with a protrusion at a position corresponding to the recess.

14. The battery cell according to claim 12 or 13, **characterized in that** the battery cell further comprises a cell assembly, wherein the cell assembly comprises a body portion and a tab, the adapting component connects the tab and the electrode terminal, and thickness of a portion at which the adapting component is welded to the electrode terminal is M; and
in an axial direction of the lead-out hole, a lower surface of the end cover has a first region opposite the adapting component, wherein a distance from the first region to the cell assembly is D, and an extension height of the bottom surface is T, wherein T < (D - M).

15. A battery, **characterized by** comprising the battery cell according to any one of claims 12 to 14.

16. An electric apparatus, **characterized in that** the electric apparatus comprises the battery cell according to any one of claims 12 to 14.
